# EUROPEAN PATENT SPECIFICATION

(11) **EP 2 652 206 B1**
(45) Date of publication and mention of the grant of the patent: **01.10.2014**
(21) Application number: 11805144.0
(22) Date of filing: 09.12.2011
(51) Int. Cl.: E02D 27/50, E02D 27/52, E02B 9/08

(54) **OFF-SHORE ANCHOR**
OFF-SHORE ANKERUNG
ANCRAGE OFF-SHORE

(30) Priority: 13.12.2010 GB 201021117
(43) Date of publication of application: 23.10.2013
(73) Proprietor: Tidalstream Limited, Southam, Warwickshire CV47 0HF (GB)
(72) Inventor: TODMAN, Michael Torr, Southam Warwickshire CV47 2BT (GB); ARMSTRONG, John Richard Carew, London W4 2AF (GB)
(74) Representative: Chettle, Adrian John
(86) International application number: PCT/GB2011/052447
(87) International publication number: WO 2012/080717

(56) References cited:
- DE-A1-102008 032 626
- GB-A- 2 450 624
- US-B1- 7 699 014

## Description

Current efforts to reduce dependency on carbon-fuelled power generation include the exploitation of wave and tidal resources. However, the energetic nature of locations where the best wave and tidal resources are found introduces significant problems of how devices for the capture of this energy can be safely and economically installed. These problems have been encountered with the deployment of early prototypes, but will represent an increasingly significant threat to commercial viability with the move to install and operate devices in large numbers.

Wave or tidal energy devices encounter high loads from the force of the waves or tidal flow, and secure sea or riverbed anchorages are essential for their safe operation and viability. Various methods of installation and retention are being pursued by device developers. Some require drilled and piled foundations; others anchor systems, gravity bases or suction caissons depending on seabed conditions. A significant concern is the installation of these in a timely manner, which is easily jeopardised by vulnerability to weather conditions and sea states causing delays and cost escalation. The cost of hiring specialist vessels that can undertake this type of installation is considerable, and delays can rapidly ruin commercial viability. Timely retrieval of the devices for maintenance, repair or end of life removal can also be jeopardised for similar reasons.

Almost all tidal devices are likely to be located within a few kilometres of shore, as that is where the best tidal flows are usually found. Many wave devices will also be located near to shore.

These marine devices may incorporate structures with feet that sit on the seabed, or have a flat base, or require just a single point strong anchor. In each case the structure would conventionally require pinning, ballasting or piling to prevent movement during normal or extreme operating conditions. Additionally, these devices require a shore connection to deliver the power they are generating: this is usually achieved by cables running over the seabed. To prevent damage to these cables by abrasion or cyclic fatigue from fast tidal flow or wave action, and retain them in place, they are typically either set in a trench or covered with ballast material. In each case specialist equipment is required, again adding cost.

What is required is a solution to these difficulties which can provide a secure underwater anchorage and a protected cable connection from the anchorage to the shore.

US-B-7699014 discloses a method and system of providing an underwater anchorage by using a slide hammer to provide said anchorage by vertical impact.

According to a first aspect of the invention there is provided a method of providing an underwater anchorage, and comprising the steps of drilling a passage from the shore to emerge at an underwater anchorage location, and passing a flexible link through the passage, said link being tensioned from the shore in use to anchor a marine device at the anchorage.

Preferably the flexible link is a cable.

The method may include the step of anchoring the marine device against anchorage, so as to reduce or eliminate a requirement for pins, piles, ballast and other materials associated with construction of a conventional anchorage. Thus as the link is tensioned, the underwater surface is placed under compressive load, which rigidifies and compacts the underwater materials to give a secure anchorage without additional measures. By pulling the device against the anchorage, it is located against loads and forces due to currents and waves.

In a preferred embodiment the method envisages use of lightweight and highly portable directional drilling machines. These can operate from a secure land-based position and drill a hole or passage under the sea or river bed. At the appropriate position the drill is caused to change direction and emerge at a point on the sea or riverbed where the marine device is to be located. Currently passages in excess of 2km length are already within scope and the capabilities are increasing with the introduction of more powerful machines.

In one embodiment, the first step in the application of this method is to drill a passage from a chosen point on the shore down and out under the seabed until it reaches the offshore location chosen for the device. The drill is then controlled to turn and emerge through the seabed. The passage so formed may be lined with a reinforcing tube as is common in larger scale offshore oil applications, to prevent collapse and reduce friction. A pilot wire is sent through the passage, using a 'pig' or similar device, followed by a full tensioning cable. The cable end emerges into the water and is brought to the surface with a buoyancy float. The marine device is floated or transported out to the site and connected to the cable end. Alternatively, the cable could be connected to a structure that is already submerged by a diver or remotely operated vehicle. The shore-based cable end is connected to a tensioning system, which can now be used to pull the marine device into position on the sea or riverbed. The cable may be locked at the shore end with residual tension to ensure the marine device is firmly held in place. If the marine device has natural buoyancy, then release of the cable at the shore end will allow the device to rise back to the surface when required for access or removal. The marine device may include spreaders or the like to distribute tensioning forces on the underwater surface.

In an alternative anchorage system, the drilled hole may be caused to emerge from the seabed essentially vertically, and then pull a mooring post or stanchion down into it. This can provide a single point fixing capable of resisting significant shear loads in addition to or instead of vertical loads. Alternatively, an anchor in the form of a flanged sleeve may be permanently located at the exit of the hole through the seabed, which can then act as a location point for a removable spigot or post. A marine device may be anchored by cable or pivotable arm to such a spigot or post.

As the bored hole may have rough surfaces depending on the type of rock or seabed structure encountered, it would be preferable to grout or cement an anchor in place for security. It can be arranged to use the pull-down tensioning system to both engage the anchor at the underwater surface and apply a grouting compound, as will be seen in attached diagrams. Once the anchor is securely fixed, it may be possible to remove the tensioning link.

Directionally drilled holes according to the invention may be provided with an inserted liner to ensure the passage is kept clear of debris, and this liner can be adapted to provide a low-friction, hard-wearing surface for a tensioned cable to pass through. The lining or guide is preferably inserted after the passage is drilled but before the cable is pulled into place.

In a further embodiment of the invention, it is possible to install a sleeve protecting the passage at the point it emerges through the seabed using the same single cable pull-down system. The sleeve would become a permanent item left in place and allows an additional feature to be adopted, that is when the cable tension is released the mooring post allowed to rise. To ensure operational loading does not cause the sleeve to loosen, the sleeve may be grouted into position in the hole. This could be done via an automatic grouting system which is activated by the process of pulling the sleeve into the drilled passage opening.

The significant advantage of this invention is that the drilling can be conducted from a secure land-based site where weather conditions or sea-states do not interfere and cause delays and cost escalation.

The sub-surface passage can also be used to pass power cables and communications cables between the device and the shore thus obviating the need for trenching or backfill protection which would otherwise be required, so further reducing costs and uncertainty.

The power and communication cables may form part of the tensioning link, in which case they are preferably de-coupled from tension forces. Such cables are typically in the form of electrical conductors of e.g. copper, but in the case of communications may comprise optical fibres. These cables may comprise a sheath or core of a tensioning cable.

Where an underwater anchor is installed by means of the invention, and the tensioning link is removed, the passage is available for power and communications cables. The link may for example be removed from the shore and used to draw power and transmission links through the passage from the anchor location.

The system of the invention can also be used to secure other types of marine structures such as navigation aids, bridges, piers or moorings. Also, in place of a cable, a chain or linked rods or a combination of each could be used.

Further features of the invention will be apparent from the claims appended hereto.

These and other features of the invention will be apparent from the following description of preferred embodiments illustrated by way of example only in the accompanying drawings:
**Figure 1** shows a marine device with a general section of land and seabed
**Figure 2** illustrates a bored passage through seabed
**Figure 3** shows a device tethered via the bored passage
**Figure 4** shows a buoy tethered via the bored passage
**Figure 5** shows a device being remotely deployed
**Figure 6** illustrates a typical mooring post
**Figure 7a** and **7b** illustrate an installation with a sleeve and flange
**Figure 8a** and **8b** illustrate a possible remote grouting applicator.

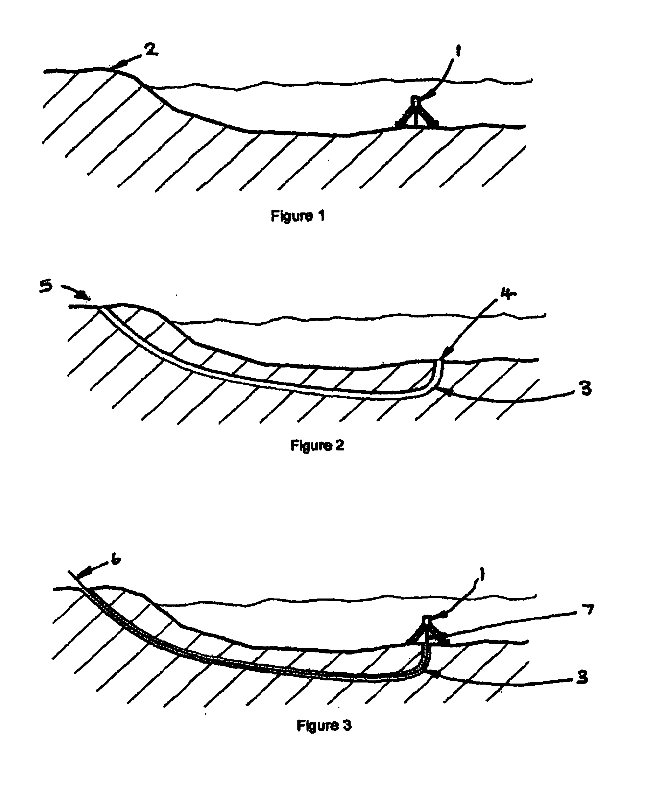

With reference to Figure 1, a marine device (1), which could be such as a wave or tidal energy conversion device or navigation structure, is located on a sea or river bed, some distance from land (2).

**Figure 2** shows a passage made by means of a directionally-controlled drilling system that is located on land at point (5) through the ground and under the sea or river. The path of the passage is controlled by conventional means to emerge at point (4), the chosen location for a marine device.

**Figure 3** illustrates a cable (7) passed through the passage (3) and attached by diver or remote operated vehicle to the marine device (1). The device is then held securely onto the seabed at its chosen location over the emerging passage (3) by means of tensioning and locking the cable onshore at (6). Other kinds of remotely latching the cable and device are possible.

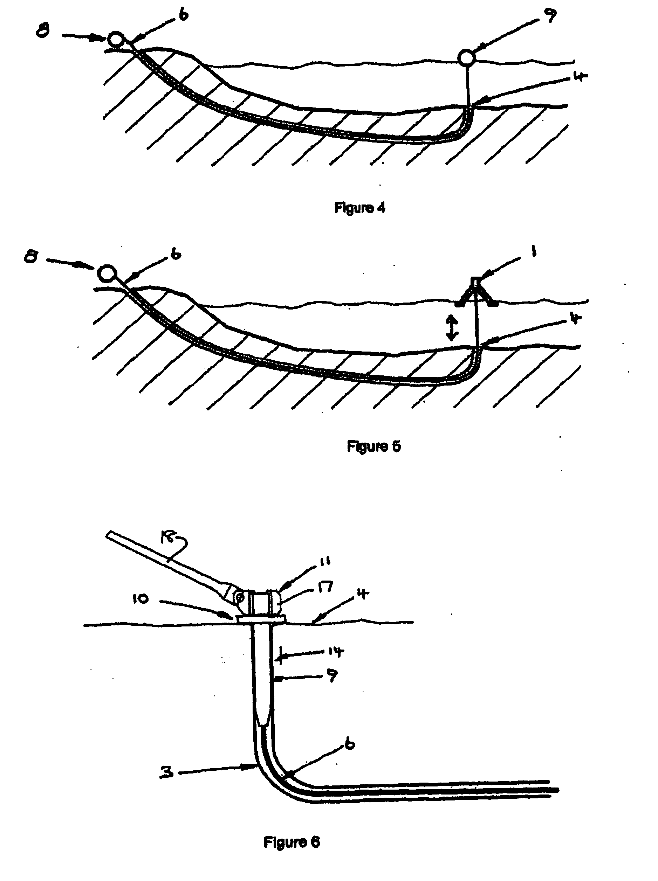

**Figure 4** shows how a float can be used to assist the attachment of the marine device to the cable (6). The float (9) may be sent through the passage by conventional pipeline pig unwinding from winch mechanism (8) and inflated on exit at (4) causing it to rise to the surface pulling the cable with it. The cable can then be located from the surface and attached to floating marine device (not shown), before tensioning thereof.

**Figure 5** shows the marine device (1) floating at the surface and having been connected to the cable (6) ready for pulling down to its location (4) on the sea or riverbed by means of pulling from a winch (8) from land. Device (1) can also be released and allowed to return to the surface for maintenance or repair by means of releasing the tether cable or chain from point (8). This is facilitated by inherent buoyancy of the device, or through the addition of buoyancy bags, or by removal of ballast.

A single post mooring system is illustrated in **Figure 6****.** In this case the drilled passage (3) emerges through the seabed (4) essentially vertically and the inserted cable (6) is attached at the sea or river surface to a post (9). As the cable is pulled from shore, post (9) is drawn down into the passage until a flange (10) on the post comes to rest on the seabed (4). Tension in cable (6) retains the post securely. A section of the post is left proud of the seabed and can be used as a location for a flexible or rigid mooring system (11) as may be found on marine structures, such as the collar (17) and pivoted arm (18) which is illustrated.

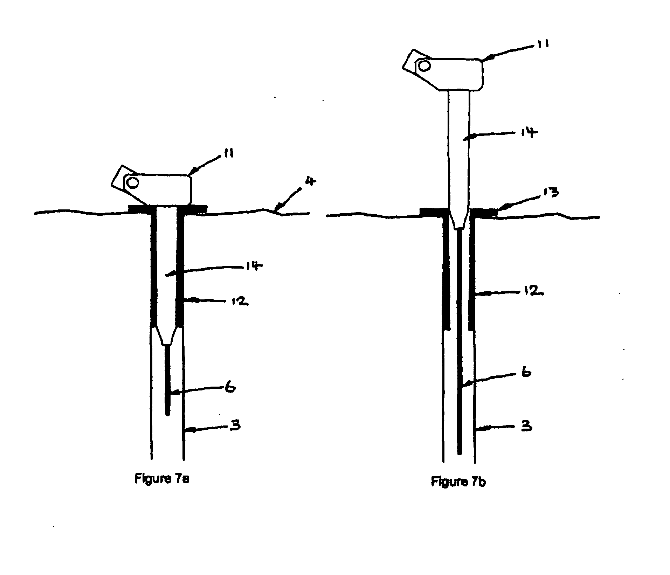

**Figure 7a** shows the further embodiment in which a post (14) is located inside a separate sleeve and flange (12, 13) which comprises a permanent feature of the installation. Sleeve (12) is pulled down into the passage (3) by means of cable (6) until the flange (13) is in firm contact with the seabed (4). **Figure 7b** indicates how the post (14) can then be raised when required by means of releasing the tension in the cable (6) leaving the sleeve and flange in place.

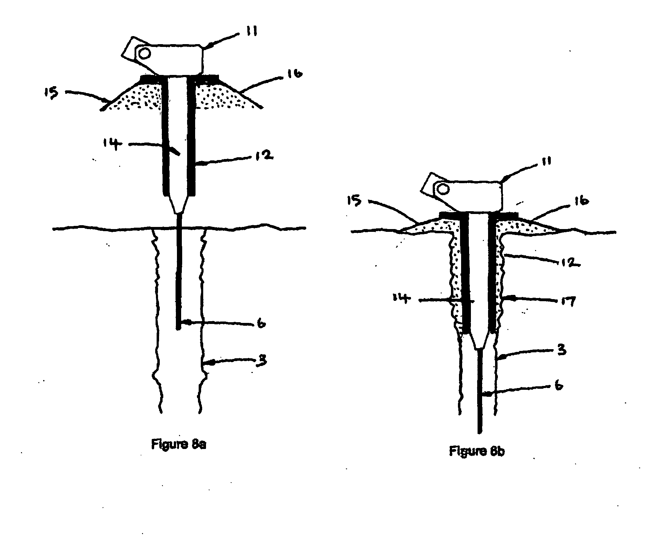

**Figure 8a** shows a further embodiment of the above system with the inclusion of an automatic grouting system. Typically this may be achieved by the use of a deformable collar (15) which is located around the sleeve (12) and which contains grout (16). By pulling on cable (6) the post (14) pulls the collar (15) and sleeve (12) with it.

**Figure 8b** shows the position when the cable (6) has pulled down the anchor post (11) into the passage (3) and the collar (15) has compressed forcing the grout down into the gap between the sleeve (12) and passage wall (3). Grout will also be forced into close contact with the surface of the seabed forming a secure bond between sleeve and collar and the passage interface. The sleeve (12) will have features on its surface to ensure the grouting locks it securely in place. When the grout has set, the post (14) can be released if required.

Other methods of utilising the downward motion of the anchor assembly can also be adopted to force a grout or cement into interstices between the seabed and structure thus ensuring a positive location.

It is also possible to use a grouting system such as that described to fix in place a single post (9) - as shown in Figure 6 - without the additional sleeve and flange. In this case the post fixing will be permanent. One advantage of this is that cable tensioning may not be required once the grout has set, and the cable may be removed. The passage may be used for other purposes, for instance carrying a power or communications cable or tube.

In one embodiment of Fig. 8, the tensioning cable is used to draw a power and/or communications cable through the passage (3) to the shore. Any suitable means of latching or linking the cables may be used for this purpose.

## Claims

1. A method of providing an underwater anchorage, **characterized in that** said method comprises the steps of drilling a passage (3) from the shore (5) to emerge at an underwater anchorage location (4), and passing a flexible link (7) through the passage, said link being tensioned in use from the shore to anchor a marine device (1) at the anchorage location.

2. A method according to claim 1, wherein said link includes a float (9) at the underwater end thereof, said method including the step of passing sufficient length of link (7) through the passage (3) to permit the end to rise toward the water surface.

3. A method according to claim 1 or claim 2, and including the step of lining the passage (3) with a low friction surface.

4. A method according to any of claims 1-3, and including the step of attaching an anchor (11) to the free end of said link (7) when emerged from the passage (3), and tensioning said link to fix the anchor at the anchorage location.

5. A method according to claim 4, and including the step of permanently adhering the anchor (11) to the underwater surface at the anchorage location (4).

6. A method according to claim 5, and including the further step of releasing tension in the link (7).

7. A method according to claim 6, and including the further step of removing the link (7) from the passage (3).

8. A method according to claim 7, wherein said link (7) is removed from said passage at the shore end (5), and is used to draw a power or communications connector through said passage.

9. A method according to any of claims 1-7, and including the step of providing in said passage (3) a cable for transmission of electricity and/or communications.

10. A retention system for anchoring a marine structure to a sea or river bed, **characterized by** and comprising a tensioned flexible link (7) from an onshore position (5) through an underground passage (3) to a marine device (1).

11. A retention system according to claim 10, utilising a directionally drilled passage (3) from said onshore position (5) to the anchorage (4) of said marine device.

12. A retention system according to claim 11, wherein the passage (3) is provided with a liner.

13. A retention system according to any of claims 10-12, and further comprising a means of adjustable tensioning and locking said link (7) from onshore.

14. A retention system according to any of claims 10-13, and having means for controlled release of tension in said link (7).

15. A retention system according to any of claims 10-14, wherein a power or communication transmission conduit is provided through said passage (3).

16. A retention system according to any of claims 10-15, and further comprising an anchor (11) adapted to be pulled into the underwater surface by tensioning of said link (7).

17. A retention system according to claim 16, and further including a system for inserting a grout fixing between the anchor (11) and an opening in the underwater surface.

18. A retention system according to any of claims 10-17, and further incorporating a sleeve (12) located in the underwater surface immediately below the intended location of a marine device, and through which passes said link (7).

19. A retention system according to any of claims 10-18, wherein said link (7) comprises one of a cable, a chain, linked rods and linked tubes.

## Patentansprüche

1. Verfahren zum Bereitstellen einer Unterwasserverankerung, **dadurch gekennzeichnet, dass** das Verfahren die Schritte zum Bohren eines Kanals (3) von Land (2) derart, dass er an einer Unterwasserverankerungsstelle (4) heraustritt, und zum Durchführen eines flexiblen Verbindungsstücks (7) durch den Kanal, wobei das Verbindungsstück im Einsatz von der Küste aus gespannt wird, um eine Meeres- oder Seevorrichtung (1) an der Verankerungsstelle zu verankern.

2. Verfahren nach Anspruch 1, wobei das Verbindungsstück einen Schwimmer (9) an seinem Unterwasserende umfasst, wobei das Verfahren den Schritt zum Durchführen einer ausreichenden Länge des Verbindung durch den Kanal (3) umfasst, so dass das Ende bis zur Wasseroberfläche nach oben ragen kann.

3. Verfahren nach Anspruch 1 oder Anspruch 2, das den Schritt zum Überziehen der Durchführung (3) mit einer reibungsarmen Oberfläche umfasst.

4. Verfahren nach einem der Ansprüche 1 bis 3, das den Schritt zum Befestigen eines Ankers (11) an dem freien Ende des Verbindungsstücks (7), wenn es aus dem Kanal (3) heraustritt, und zum Spannen des Verbindungsstücks, um den Anker an der Verankerungsstelle zu befestigen, umfasst.

5. Verfahren nach Anspruch 4, das den Schritt zum dauerhaften Befestigen des Ankers (11) an der Unterwasseroberfläche bei der Verankerungsstelle (4) umfasst.

6. Verfahren nach Anspruch 5, das den weiteren Schritt zum Lösen der Spannung in dem Verbindungsstück (7) umfasst.

7. Verfahren nach Anspruch 6, das den weiteren Schritt zum Entfernen des Verbindungsstücks (7) aus dem Kanal (6) umfasst.

8. Verfahren nach Anspruch 7, wobei das Verbindungsstück (7) an dem Küstenende (5) aus dem Kanal entfernt wird und dazu verwendet wird, einen Stromoder Kommunikationsanschluss durch den Kanal zu ziehen.

9. Verfahren nach einem der Ansprüche 1-7, das den Schritt zum Bereitstellen eines Kabels zur Strom- und oder Kommunikationsübertragung in dem Kanal (3) umfasst.

10. Haltesystem zum Verankern einer Meeres- oder Seestruktur an einem Meeresoder Seeboden oder einem Flussbett, **gekennzeichnet durch** und umfassend ein gespanntes, flexibles Verbindungsstück (7) von einer Position an Land (5) **durch** einen unter der Erde liegenden Kanal (3) zu einer Meeres- oder Seestruktur (1).

11. Haltesystem nach Anspruch 10, das einen gerichtet gebohrten Kanal (3) von der Position an Land (5) zu der Verankerung (4) der Meeres- oder Seevorrichtung umfasst.

12. Haltesystem nach Anspruch 11, wobei der Kanal (3) einen Überzug umfasst.

13. Haltesystem nach einem der Ansprüche 10-12, das ferner ein Mittel zum einstellbaren Spannen und Arretieren des Verbindungsstücks (7) von Land aus umfasst.

14. Haltesystem nach einem der Ansprüche 10-13, das ein Mittel zum kontrollierten Lösen einer Spannung in dem Verbindungsstück (7) umfasst.

15. Haltesystem nach einem der Ansprüche 10-14, wobei eine Strom- oder Kommunikationsübertragungsleitung durch den Kanal (3) geführt ist.

16. Haltesystem nach einem der Ansprüche 10-15, das ferner einen Anker (11) umfasst, der dazu geeignet ist, durch Spannen des Verbindungsstücks (7) in die Unterwasseroberfläche gezogen zu werden.

17. Haltesystem nach Anspruch 16, das ferner ein System zum Einsetzen einer Mörtelbefestigung zwischen den Anker (11) und eine Öffnung in der Wasseroberfläche umfasst.

18. Haltesystem nach einem der Ansprüche 10-17, das ferner eine Buchse (12) umfasst, die unmittelbar unter der vorgesehenen Stelle einer Meeres- oder Seevorrichtung in die Unterwasseroberfläche eingebracht und durch die das Verbindungsstück (7) geführt ist.

19. Haltesystem nach einem der Ansprüche 10-18, wobei das Verbindungsstück (7) entweder ein Kabel, eine Kette, verbundene Stangen oder verbundene Rohre umfasst.

## Revendications

1. Procédé pour fournir un ancrage sous-marin, **caractérisé en ce que** ledit procédé comprend les étapes consistant à percer un passage (3) depuis le rivage (5) pour ressortir à un site d'ancrage sous-marin (4), et faire passer une liaison flexible (7) par le passage, ladite liaison étant tendue, à l'usage, à partir du rivage pour ancrer un dispositif marin (1) sur le site d'ancrage.

2. Procédé selon la revendication 1, dans lequel ladite liaison comprend un flotteur (9) au niveau de son extrémité sous-marine, ledit procédé comprenant l'étape consistant à faire passer la longueur suffisante de liaison (7) par le passage (3) afin de permettre à l'extrémité de remonter vers la surface de l'eau.

3. Procédé selon la revendication 1 ou la revendication 2, et comprenant l'étape consistant à recouvrir le passage (3) avec une surface à faible frottement.

4. Procédé selon l'une quelconque des revendications 1 à 3, et comprenant l'étape consistant à fixer une ancre (11) à l'extrémité libre de ladite liaison (7) lorsqu'elle ressort du passage (3), et tendre ladite liaison pour fixer l'ancre sur le site d'ancrage.

5. Procédé selon la revendication 4, et comprenant l'étape consistant à fixer de manière permanente l'ancre (11) à la surface sous-marine sur le site d'ancrage (4).

6. Procédé selon la revendication 5, et comprenant l'étape supplémentaire consistant à relâcher la tension dans la liaison (7).

7. Procédé selon la revendication 6, et comprenant l'étape supplémentaire consistant à retirer la liaison (7) du passage (3).

8. Procédé selon la revendication 7, dans lequel ladite liaison (7) est retirée dudit passage au niveau de l'extrémité de rivage (5), et est utilisée pour tirer un connecteur d'énergie ou de communication à travers ledit passage.

9. Procédé selon l'une quelconque des revendications 1 à 7, et comprenant l'étape consistant à prévoir dans ledit passage (3), un câble pour la transmission d'électricité et/ou de communications.

10. Système de retenue pour ancrer une structure marine à un lit marin ou de rivière, **caractérisé par** et comprenant une liaison flexible tendue (7) à partir d'une position sur la terre (5) passant par un passage souterrain (3) jusqu'à un dispositif marin (1).

11. Système de retenue selon la revendication 10, utilisant un passage (3) percé de manière directionnelle à partir de ladite position sur la terre (5) jusqu'à l'ancrage (4) dudit dispositif marin.

12. Système de retenue selon la revendication 11, dans lequel le passage (3) est prévu avec un revêtement.

13. Système de retenue selon l'une quelconque des revendications 10 à 12, et comprenant en outre un moyen pour tendre et bloquer de manière ajustable ladite liaison (7) depuis la terre.

14. Système de retenue selon l'une quelconque des revendications 10 à 13, et ayant un moyen pour le relâchement contrôlé de la tension dans ladite liaison (7).

15. Système de retenue selon l'une quelconque des revendications 10 à 14, dans lequel un conduit de transmission d'énergie ou de communication est prévu à travers ledit passage (3).

16. Système de retenue selon l'une quelconque des revendications 10 à 15, et comprenant en outre une ancre (11) adaptée pour être tirée dans la surface sous-marine en tendant ladite liaison (7).

17. Système de retenue selon la revendication 16, et comprenant en outre un système pour insérer un coulis de fixation entre l'ancre (11) et une ouverture dans la surface sous-marine.

18. Système de retenue selon l'une quelconque des revendications 10 à 17, et comprenant en outre un manchon (12) positionné dans la surface sous-marine immédiatement au-dessous du site prévu d'un dispositif marin, et à travers lequel passe ladite liaison (7).

19. Système de retenue selon l'une quelconque des revendications 10 à 18, dans lequel ladite liaison (7) comprend l'un parmi un câble, une chaîne, des tiges reliées et des tubes reliés.
